Europäisches Patentamt

European Patent Office

Office européen des brevets

(11) Publication number:

**0 311 546**
**A2**

(12) # EUROPEAN PATENT APPLICATION

(21) Application number: **88500024.0**

(22) Date of filing: **04.03.88**

(51) Int. Cl.⁴: **F 16 K 31/60**
**F 16 K 11/078**

(30) Priority: **06.10.87 ES 8703109**

(43) Date of publication of application:
**12.04.89 Bulletin 89/15**

(84) Designated Contracting States:
**AT BE CH DE FR GB IT LI LU NL**

(71) Applicant: **CASA BUADES, S.A.**
**c/ Eusebio Estada 78-80**
**E-07004 Palma de Mallorca (ES)**

(72) Inventor: **Hecht Burgos, Ignacio**
**Eusebio Estada, 78-80**
**Palma de Mallorca (ES)**

(74) Representative: **Elzaburu Marquez, Alberto et al**
**Sres. Elzaburu Industrial Property Attorneys Miguel**
**Angel, 21**
**E-28010 Madrid (ES)**

(54) **Adjustable flow and temperature stop mechanism for use in single control mixer cartridges in plumbing fixtures.**

(57) An adjustable stop mechanism is described in which several longitudinal grooves are made in a mobile shaft (1) of the cartridge on which are fitted two sockets (2 and 3) which have in their interior the counterpart of these grooves, thus becoming integral with the shaft. One of these grooved sockets defines the rotation stop, limiting the maximum content of hot water in the mixture, while the other limits maximum flow, these being independently decided by the relative position with the grooved shaft.

Fig. 1

## Description

## ADJUSTABLE FLOW AND TEMPERATURE STOP MECHANISM FOR USE IN SINGLE CONTROL MIXER CARTRIDGES IN PLUMBING FIXTURES

What are known as single control mixers in plumbing fixtures consist of a mechanism worked by a single control which regulates the flow and the proportion of mixture of cold and hot water by means of two independent movements.

Normally, the rotation of the control along the principal shaft of the mechanism, referred to as a cartridge, determines the mixture, such that in its central position the cold and hot water mix in a proportion of 50% and moving from this position towards the right the amount of the cold water increases and towards the left the amount of hot water increases. The total maximum rotation varies between around 80° and 180° depending on the cartridge, it always being the case that at the limit in either direction the intake of the opposite water is nil, so the mix is 100% cold water (righthand limit) or 100% hot water (lefthand limit).

Flow is regulated by the vertical or tilting movement of the control, being closed in its lowest position and at maximum flow in its highest position, for any rotation position or degree of mixture.

It is to be expected that the movements of the control are short runs and these are to a certain extent difficult to regulate. The tendency is for the user to take any run to its fullest extent. This operating method gives rise to two problems: one relating to the mixture and the other relating to the flow.

The first problem arises when the hot water is supplied at a very high temperature. It is normal for this to reach levels of around 70° to 80° C. Given the short runs of the single control operating handle, it is not unlikely that an involuntary jolt or a child's inexpert handling might take the cartridge to its fullest intake of hot water. The abovementioned temperatures are more than enough to cause serious burns or at the very least an extremely unpleasant scald; a situation which becomes even more serious in the event of a shower being taken, in which case the burn can be generalised.

In addition to this problem with hot water and similarly caused by the characteristic handling of the single control, is the problem of the misuse of hot water, particularly in public or communal places, involving a serious waste of energy.

The second problem, relating to flow, comes from the use of the single control at its fullest opening. In effect, and again this is caused by the short runs of this type of plumbing fixture, regulation of flow by the user is practically nonexistant, since he will tend to place the control at its highest position, therefore requiring of it the fullest flow at all times. This means in many cases a useless waste of water, which in many regions and cities is in short supply. It is obvious that this should then lead to the design of a cartridge which provides a lesser flow, but this solution would not be acceptable since there are obviously occasions, such as for example when filling a bath, when it is useful or even necessary to have a greater flow. In addition, there are regulations which fix a minimum flow.

The patent application which is being presented here solves the two problems explained above by incorporating in the cartridge, by means of a grooved socket mechanism, several additional flow and temperature stops which can be adjusted by the installer.

This mechanism is based on the fact that in the mobile shaft of the cartridge several longitudinal grooves have been made and on these are fitted two sockets which have in their interior the counterpart of these grooves, in this way becoming integral with the shaft. One of these sockets defines the end of rotation, limiting the maximum amount of hot water in the mixture, the other limits maximum flow, each of these being decided on independently by their position relative to the grooved shaft.

Access to these parts can be gained before or after the plumbing system and cartridge is installed, without requiring the water supply to be shut off and with the aid of a screwdriver. To do this the screw holding the handle of the single control to its shaft is loosened, then the handle and its protector are easily removed exposing the parts necessary for the adjustment.

In brief, the adjustable temperature and flow stop mechanism which is the subject of the invention is characterised by the mobile shaft (1) of the cartridge having had several longitudinal grooves made in it over which two sockets (2 and 3) are fitted which have in their interior the counterpart of these grooves, in this way becoming integral with the shaft, each one of them having independently multiple variations of relative positioning with respect to the shaft (1) in its direction of rotation due to the different interlocking possibilities of the grooves.

According to the invention, the first grooved socket (2), as it interlocks with the grooved shaft (1), introduces an additional rotation stop to the internal stops of the cartridge by having a projection (13) which has to move within the limits of a recess (14) made in the vessel (4) of the cartridge.

As choice of the relative position between the grooved shaft (1) and the grooved socket (2)is possible, rotation of the shaft (1) of the cartridge can be limited as desired, in this way limiting the intake of hot water and consequently the maximum temperature of mixture.

According to an additional characteristic of the mechanism which is the subject of the invention, the second grooved socket (3) has, according to its view from above, a through hole (15) of a special contour made up of a circular sector (16) which extends into a serrated or stepped line (17) up to the close of the contour, this stepped line (17) having a spiral casing, by means of which the first steps are close to the centre and the distance from it increases along the line.

The second grooved socket (3) is incorporated into the grooved shaft (1), the rod (7) passing through the hole (15) of the socket (3), so that the tilting movement of the rod (7) becomes limited by the contour of the hole (15).

According to another additional feature of the adjustable flow and temperature stop mechanism which is the subject of this invention, as it is possible to choose the relative positioning of the second grooved socket (3) in relation to the grooved shaft (1), this is also possible in relation to the rod (7) in the principal direction of rotation of the cartridge, so that for any of these positions the tilting movement of the rod (7) is not limited in its forward area by the contour of the hole (15) of the grooved socket (3), since it enters the free area of the circular sector (16). In this way complete shut off of intake can always be achieved. Whereas in the direction of opening, when the rod (7) is tilted towards the back part, it meets the teeth of the stepped line (17) of the said contour, allowing one or other tooth to be reached depending on the position in which the socket (3) has been inserted in the grooved shaft (1) and because of the spiral arrangement of the teeth of the contour a preselectable opening can be achieved and consequently an adjustable limitation of maximum flow.

Finally, a circular slot (18) has been made in the second grooved socket (3) where an elastic fork yoke (5) can be fitted, two diametrically opposing windows (19) having been opened in the said slot (18) in such a way that the fork yoke (5), once fitted in the slot (18), sticks out through them towards the inside of the socket, a second circular slot (20) having been made in the grooved shaft (1) of the cartridge in such a way that when the aforementioned second grooved socket (3) interlocks with the shaft (1), the fork yoke (5) gives way and is pressed through the windows (19) allowing passage of the shaft (1) till it meets the slot (20) which clasps it, thus immobilising the second socket (3) which in its turn prevents the first one (2) from coming out and in this way fixing the additional parts of the cartridge.

Below an illustrative version, which is by no means exhaustive, of the subject of the invention will be described, supposing it to be incorporated in any cartridge from which the mechanisms which do not relate to this invention are omitted, and referring to the attached drawings, in which:

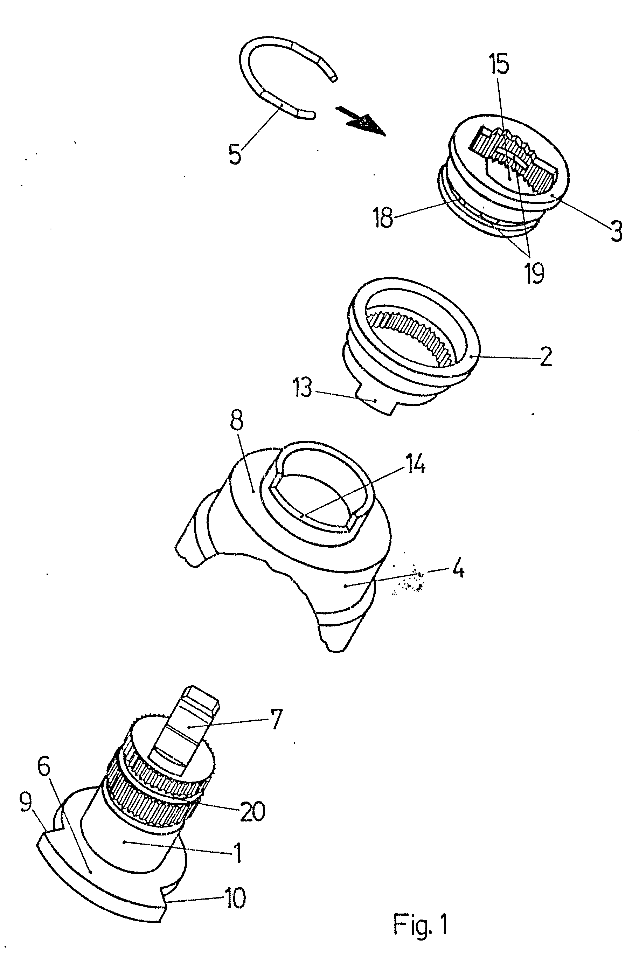

Figure 1 is a dismantled view of the parts involved in this mechanism.

Figure 2 is a view from above of the cartridge.

Figure 3 is a front view of the cartridge, with a half cross-section to give access to the assembly of the internal parts.

Figure 4 is a view along the C-D cross-section of figure 3.

Figure 5 is a view along the A-B cross-section of figure 3.

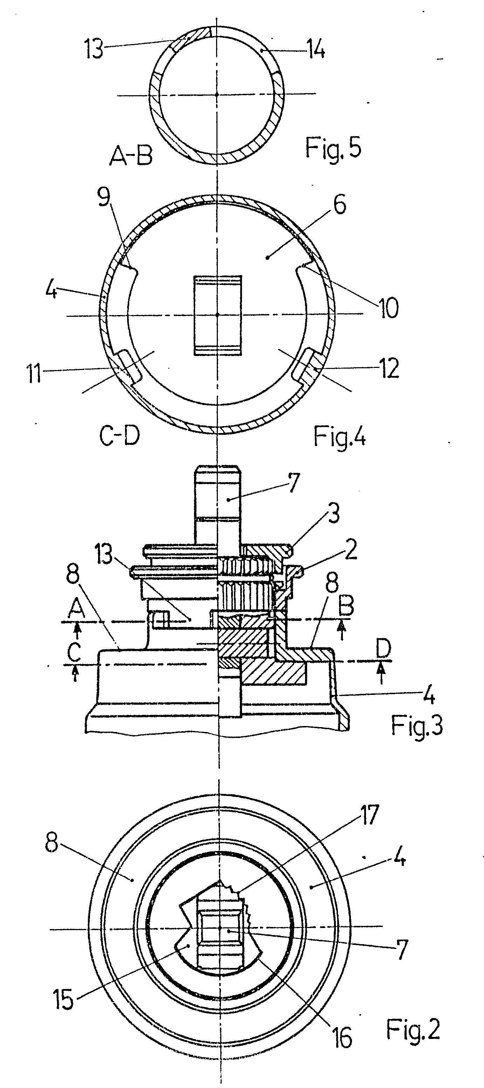

Figures 2,3,4 and 5 correspond to an intermediate position of flow and proportion of mixture.

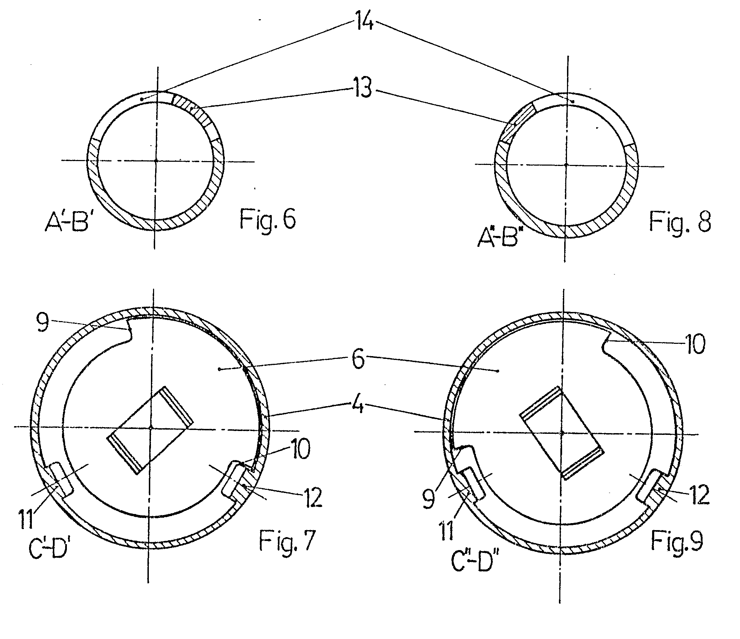

Figures 6 and 7 are views of figure 3 along the cross-sections A-B and C-D, respectively, but for a situation of maximum opening for cold water.

Figures 8 and 9 are views of figure 3 along the cross-sections A-B and C-D respectively, but for a situation of maximum opening for hot water with the corresponding adjustable stop coming into play.

For the sake of clarity in figures 5, 6 and 8 drawing details which would not be illustrative of the invention being described have not been included.

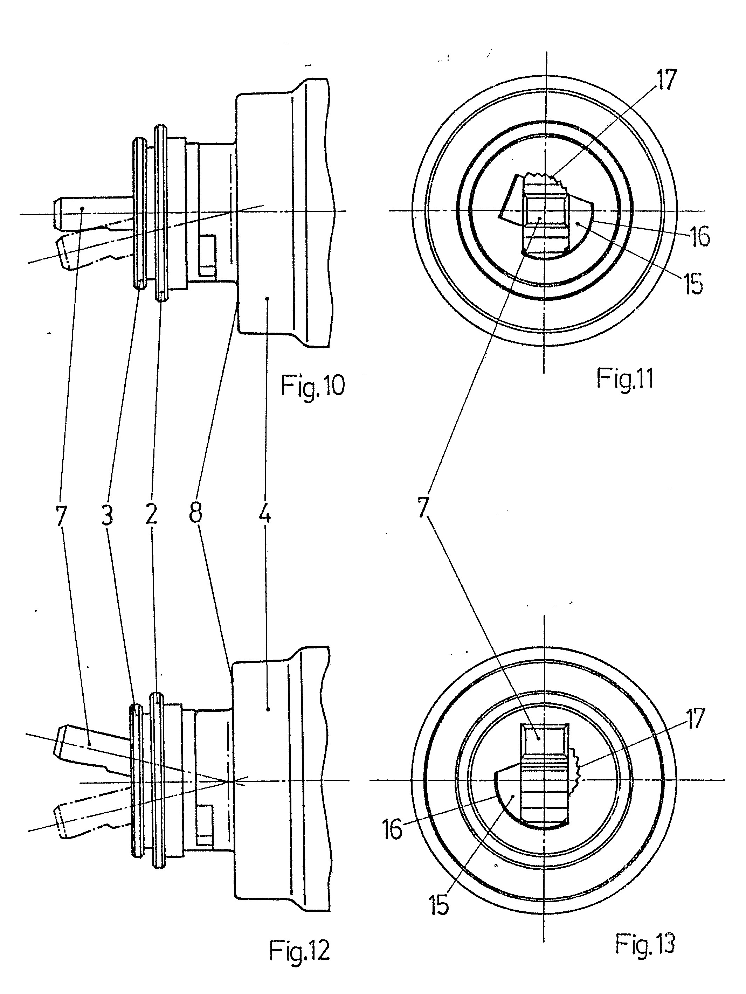

Figures 10 and 11 are, respectively, a profile and the view from above of the cartridge with the flow stop adjusted to an intermediate position.

Figures 12 and 13 show the same views as 10 and 11, but with the flow stop adjusted to maximum intake.

In the mechanism of the present invention three basic parts come into play, the grooved shaft (1) and the two grooved sockets (2 and 3). To them will be added, as complementaries, the vessel (4) of the cartridge, containing the rest of the mechanisms, the fork yoke (5), fixing element for the sockets, and the operating rod (7).

The shaft (1) forms a single part with the sill (6) and also houses the rod (7) by means of a small transversal shaft which allows it to rock from its closed position to the position for maximum flow.

The cartridge is fixed to the rest of the plumbing fixture by means of a screw which presses the vessel along its flat surface (8). In this way, although the cartridge is now assembled, the aforementioned parts, that is, the grooved sockets (2 and 3) and the fastening fork yoke (5) remain accessible for handling.

The grooved shaft (1) is what regulates the proportion of mixture by means of its rotation. If the grooved sockets (2 and 3) did not exist, the shaft (1) would be limited in its rotation by the projections (9 and 10) of the sill (6), with which it forms a single part. In effect, the rotation stops when the projection (9) meets the internal partition or notch (11) of the cartridge vessel, or, turning in the opposite direction, when, as figure 7 shows, the other projection (10) meets the corresponding internal partition (12) of the vessel. The first projection (9) and its corresponding internal partition (11) give maximum intake of hot water. The second operates the cold water.

If the first socket (2) is now incorporated with the grooved shaft (1) an additional rotation limit is created since a new stop (13) is introduced, which is obliged to move solely within the recess (14) made in the vessel (4). The double grooving of the shaft (1) and socket (2) make both parts integral and allows multiple relative positions to be obtained as desired. To this effect this grooving has been designed to be very fine so as to make multiple variations of insertion possible and consequently multiple variations of position.

In figures 6,7,8 and 9 the said socket (2) is shown inserted in such a way that it does not intervene in the cold water zone, since the stop (10) limits rotation first (figures 6 and 7), but it does play a part in its movement towards the hot area as can be seen in figure 8 as it meets the end of the recess (14) of the vessel (4) before the projection (9) of the sill (6) meets the internal partition (11) (figure 9).

In what has been described up to now no mention is made of the flow, since this is independent of what is described. The rod, (7) as it rocks within a plane longitudinal to the cartridge and around its small shaft housed in the grooved shaft(1), determines the required flow. The limits of movement are given by stops internal to the cartridge which play no part in the mechanism described.

If the second grooved socket (3) is incorporated a maximum flow stop is introduced which acts in the following way: the socket (3) according to its view from above has a through hole (15) with a special contour. The rod (7) passes through this hole, in such a way that this contour limits its movement depending on the relative position between socket (3) and grooved shaft (1). This relative position can be varied or preselected as desired following the double grooving system identical to that used between the shaft (1) and the first socket (2) for temperature regulation.

This contour forms a drawing made up of a circular sector (16) in the front part, and a serrated or stepped line (17) in the opposite area. The contour is designed in such a way that for any relative position of the socket (3) to the shaft (1), the rod (7) can reach forwards to its full limit of shut off as it goes into the circular sector (16), whereas its backwards limit or that of full flow depends on this position and is determined by the serrated area (17).

In effect the steps of this serrated area follow a spiral casing so that the first are close to the centre, gradually getting further away until the last one or one furthest away coincides with the maximum limit of opening for which the cartridge is designed. In this way, depending on the position in which the socket (3) is interlocked with the shaft (1), making use of the multiplicity of variations resulting from the grooving, the rod (7) will be limited in its opening by one or other step, which gives the possibility of opening as far as allowing the maximum flow of the cartridge as is shown in figures 12 and 13, or having its movement interrupted by one of the steps of the toothed contour (17) which does not allow more flow than this opening will give, as is shown in figures 10 and 11.

In order to fix the two grooved sockets (2 and 3) to the shaft (1), an elastic fork yoke (5) is used. This fork yoke (5) clamps the second socket (3) by means of a circular slot (18) made in it. This slot (18) has two windows (19) faced in such a way that the fork yoke (5) when placed in the slot (18) sticks out towards the inside through the windows (19). On its side the shaft (1) has a circular slot (20) which can house the fork yoke (5). When the socket (3) is interlocked with the fork yoke (5) to the shaft (1), this gives way and is then clasped through the windows (19) by the slot (20) of the shaft (1), in this way immobilising the socket (3) which in turn immobilises the first socket (2).

## Claims

1.- Adjustable flow and temperature stop mechanism for use in single control mixer cartridges in plumbing fixtures in which the rotation of the principal shaft of the cartridge determines the proportion of mixture while flow is regulated by the tilting of a rod from its forward position to its backward position and on which the control handle is fixed, adjustable flow and temperature stop mechanism wherein several longitudinal grooves have been made in the mobile shaft (1) of the cartridge on which two sockets (2 and 3) are fitted which have in their interior the counterpart of these grooves, in this way becoming integral with the shaft, each of them having independently multiple variations of relative positioning with respect to the shaft (1) in its direction of rotation, due to the different interlocking possibilities of the grooves.

2.- Adjustable flow and temperature stop mechanism as in Claim 1, wherein the first grooved socket (2), as it interlocks with the grooved shaft (1), introduces an additional rotation stop to the internal stops of the cartridge by having a projection (13) which has to move within the limits of a recess (14) made in the vessel (4) of the cartridge.

3.- Adjustable flow and temperature stop mechanism as in Claims 1 and 2, wherein, as choice of the relative position between the shaft (1) and the grooved socket (2) is possible, the rotation of the shaft (1) of the cartridge can be limited as desired, in this way limiting the intake of hot water and consequently the maximum temperature of mixture.

4.- Adjustable flow and temperature stop mechanism as in the first Claim, wherein the second grooved socket (3) has, according to the view from above, a through hole (15) of a special contour made up of a circular sector (16) which extends into a serrated or stepped line (17) up to the close of the contour, this stepped line (17) having a spiral casing, by means of which the first steps are close to the centre and the distance from it increases along the line.

5.- Adjustable flow and temperature stop mechanism as in Claims 1 and 4, wherein the second grooved socket (3) is incorporated into the grooved shaft (1), the rod (7) passing through the hole (15) of the socket (3), so that the tilting movement of the rod (7) becomes limited by the contour of the hole (15).

6.- Adjustable flow and temperature stop mechanism as in Claims 1, 4 and 5, wherein, as it is possible to choose the relative positioning of the second grooved socket (3) in relation to the grooved shaft (1), this is also possible in relation to the rod (7) in the principal direction of rotation of the cartridge, so that for any of these positions the tilting movement of the rod (7) is not limited in its forward area by the contour of the hole (15) of the grooved socket (3), since it enters the free area of the circular sector (16). In this way complete shut off of intake can always be achieved. Whereas in the direction of opening, when the rod (7) is tilted towards the back part, it meets the teeth of the stepped line (17) of the said contour, allowing one or other tooth to be reached depending on the position in which the socket (3) has been inserted in the grooved shaft (1) and because of the spiral arrangement of the teeth of the contour a preselectable opening can be achieved and consequently an adjustable limitation of maximum flow.

7.- Adjustable flow and temperature stop mechanism as in Claims 1 to 6, wherein a circular slot (18) has been made in the second grooved socket (3) where an elastic fork yoke (5) can be fitted, two diametrically opposing windows (19) having been opened in the said slot (18) in such a way that the fork yoke (5), once fitted in the slot (18), sticks out through them towards the inside of the socket, a second circular slot (20) having been made in the grooved socket (3) of the cartridge in such a way that when the aforementioned second grooved socket (3) interlocks with the shaft (1), the fork yoke (5) gives way and is pressed through the windows (19) allowing passage of the shaft (1) till it meets the slot (20) which clasps it, thus immobilising the second socket (3) which in its turn prevents the first one (2) from coming out and in this way fixing the additional parts of the cartridge.

Fig. 1

13 —— —— 14

A-B                    Fig. 5

9                           6

4 ——

11 ——                      —— 12

C-D                    Fig.4

7

13                           3

8                           2

13                           8
A                           B
C                           D

                            —— 4

                       Fig.3

17

8                           4

                            —— 7

15
16                    Fig.2

14

13

A'-B'     Fig. 6

A"-B"     Fig. 8

9

6

4

10

10

12

11

C'-D'     Fig. 7

9

11

12

C"-D"     Fig. 9

Fig.10

Fig.11

Fig.12

Fig.13